# EUROPEAN PATENT SPECIFICATION

(11) **EP 0 758 921 B1**
(45) Date of publication and mention of the grant of the patent: **25.09.2002**
(21) Application number: 95918346.8
(22) Date of filing: 02.05.1995
(51) Int. Cl.: B01J 33/00, C11C 3/12, B01J 31/02

(54) **HYDROGENATION CATALYST PARTICLES**
HYDRIERUNGSKATALYSATORTEILCHEN
PARTICULES DE CATALYSEUR D'HYDROGENATION

(30) Priority: 09.05.1994 EP 94201289
(43) Date of publication of application: 26.02.1997
(73) Proprietor: Engelhard De Meern B.V., 3454 PK De Meern (NL)
(72) Inventor: VAN DIJK, Gustaaf, J., M., NL-3755 TN Eenmes (NL)
(74) Representative: Smulders, Theodorus A.H.J., Ir.
(86) International application number: US9505395
(87) International publication number: WO95030481

(56) References cited:
- EP-A- 0 186 885
- EP-A- 0 464 956
- DE-A- 2 850 719
- FR-A- 802 536
- FR-A- 1 555 015
- GB-A- 1 042 923

## Description

The present invention relates to catalyst particles based on nickel or cobalt and a support, incorporated in a matrix of hardened oil or a derivative thereof.

Such catalysts are well known, and are employed in particular for the hydrogenation of oils and fats. These triglycerides, often containing polyunsaturated fatty acid chains, are often hydrogenated prior to use, so as to increase stability and/or to adjust the melting behaviour.

Increasing the stability of the polyunsaturated triglycerides is accomplished by hydrogenation of the readily oxidizable polyunsaturated bond. Oxidation of these bonds is undesirable, as this gives rise to a rancid taste.

Adjusting the melting behaviour of the product is particularly important with a view to rendering the product suitable for use in margarines, hard shortening and cocoa butter substitutes.

Another important application of these catalysts is the hydrogenation of fatty nitriles to obtain amines, such as primary, secondary and tertiary amines. Also in the hydrogenation of free fatty acids supported nickel and cobalt catalysts are used.

There are numerous publications dealing with these supported nickel or cobalt catalysts, such as EP-A 92,878, EP-A 167,201, EP-A 168,091, EP-A 168,096, EP-A 340,848, EP-A 384,542, EP-A 398,446, EP-464,956 and EP-A 566,197.

In commercial practice the supported nickel or cobalt catalysts, when intended to be used in powder form, for example in batch processes, are delivered to the customer incorporated in a matrix of hardened oil or, when used for nitrite hydrogenation, in solid fatty nitrile or fatty amine.

Important parameters in developing these catalysts are the improvement of selectivity, of activity and of filterability. Generally the work on these subjects has been concentrated on the modification of either the characteristics of the catalyst itself or of the hydrogenation process parameters.

Especially in the edible oil industry some producers prefer to start the hydrogenation at relatively low temperature, that is at about 120°C, or even lower, thereby using the exotherm to heat the reactor to the desired final temperature. This saves energy input and increases the capacity as the cycle time is shortened. In order to be able to decrease the starting temperature, it is of course important that the catalyst has sufficient activity at this low temperature. It has been found that the conventional catalysts do not give sufficient low temperature activity.

In DE-A-2850719 a method for the production of an Ni-catalyst protected against oxidation by oxygen in the air is disclosed, comprising coating nickel catalyst particles with fat and pressing the particles into a tablet.

It is an object of the present invention to provide for a catalyst that is suitable for this purpose.

The present invention is based on the surprising fact that the low temperature activity of a catalyst is influenced by the shape and size of the actual product used in the hydrogenation plant, that is the matrix of hardened oil (fat) or derivative thereof, in which the catalyst itself is incorporated.

The present invention is accordingly directed to hydrogenation catalyst particles consisting of a matrix of hardened oil or a derivative thereof, having incorporated therein hydrogenation catalyst particles having a particle size in the range of 1 to 100 µm, based on nickel or cobalt and a support, wherein the matrix material is solid at a temperature of 25°C and the matrix material particles having an average weight of at least 120 mg and an average height of at least 2.8 mm, the said particles being obtainable by preparing a suspension of the said hydrogenation catalyst particles in a melt of the said matrix material and letting droplets of the said suspension solidify.

The average weight of the catalyst particles can easily be determined from a representative sample of a production batch of the catalyst particles using appropriate sampling techniques (for example an amount of sample of at least 10 g), simply by determining the weight of a known number of particles and dividing the total weight by the number of particles. The average height is determined by averaging the height of the particles from the same sample. This height is defined as the smallest size of the particle. In case hemispherical particles are used, the height is the distance between the flat underside and the top of the particle. In case more or less spherical particles are used the size is simply the diameter (or smallest diameter) of the particle. In case of flakes the size is the smallest distance between two opposite surfaces of the flake.

Conventional catalyst particles did not possess the presently defined combination of features, as they had either an average weight or an average height below the required value. A number of catalysts are known having an average height of about 2.4 to 2.8 mm, in many cases in combination with an average weight of between 60 and 100 mg. One catalyst had an average weight of about 150 mg, but this catalyst did not have the required height, namely only about 2.6 mm. None of those prior art catalysts possess the very good low temperature properties of the catalysts according to the invention.

The particles of the present invention have an average height of at least 2.8 mm, preferably at least 2.9 mm, more in particular at least 3.0 mm. The upper limit is not very critical, as the object of the invention is reached when meeting the lower limit. For practical purposes the upper limit will not be more than 12 mm, as it is rather difficult to prepare and to use particles that have a height above this value.

The average weight of the particles of the present invention is at least 120 mg. According to preferred embodiments the weight is more than 130 mg, more in particular more than 140 mg, as above those limits the optimal results are obtained. Again the upper limit is not very critical, as it is mainly determined by the limits put upon the particles by production and use. Generally the upper limit is about 500 mg, preferably 300 mg.

The particles of the present invention are prepared by preparing a suspension of the supported nickel or cobalt catalyst powder (elementary catalyst particles), typically having a size in the range of 1 to 100 µm, in a melt of the hardened oil or a derivative thereof, and letting droplets of the said suspension fall on a cooled plate, resulting in solid particles having an essentially hemispherical shape.

Other methods of producing the catalyst particles are i.a. letting droplets of the suspension fall into a cooled fluid, where they solidify to more or less spherical particles (prilling in air or liquid), or flaking the suspension to flakes of a suitable thickness.

When using hemispherical particles the surface to volume ratio is less than 1.75 mm⁻¹, preferably between 0.5 and 1.75 mm⁻¹.

The matrix material of the particles can be a hardened oil or derivative thereof. Examples thereof are hardened vegetable, or less preferred animal, oils, as well as the solid derivatives thereof, such as fatty nitriles and fatty (primary, secondary and tertiary) amines.

The catalyst content in the particles can range between wide limits. Generally it will not be more than 35 wt.% of nickel or cobalt, based on the weight of the particles. A preferred upper limit is about 30 wt.%, whereas the lower limit will be determined by economical considerations, resulting in a value of at least 5 wt.%, preferably at least 10, more in particular at least 15 wt.%.

The invention is directed generally to those catalysts that are used for the hydrogenation of (animal or vegetable) oils, free fatty acids and/or nitriles. All suitable supported nickel or cobalt catalysts can be used in the particles. The catalysts described in the cited references, can for example be used in the particles. Other catalysts that can be included in a matrix of hardened oil (fat) or derivative thereof, may also be used.

The actual composition of the elementary catalyst particles is not very critical, although it is preferred to have a nickel or cobalt content between 5 and 95 wt.%, preferably between 15 and 75 wt.%. The size of the nickel crystallites may vary between 1 and 15 nm, and the nickel surface area can be between 5 and 250 m²/g of nickel.

As a support the conventional supports can be used such as the oxidic supports. Examples are silica, alumina and silica-alumina. The BET surface area of the elementary catalyst particles may be between 75 and 450 m²/g, determined according to R. Haul and G. Dümbgen (Chem.Ing.Techn.; 35, 586, (1963))

Values outside those ranges can also be used, although they are not preferred.

The determination of the various parameters can be done using conventional techniques. The nickel crystallite size may be determined from the line broadening in the X-ray diffraction pattern. The nickel surface area may be determined by H₂-chemisorption, using the assumption that one nickel atom occupies 6.5 Å² (Ref.: Yates et al, JACS 86, pp. 2996-3001, 1964).

The catalyst may be promoted with various promotors. Some of these are disclosed in the cited references. Important promotors include magnesium, copper, iron and sulphur, which may be used in varying amounts, such as between 0.1 and 15 wt.%, calculated on the weight of the nickel or cobalt.

The material to be hydrogenated using the particles of the invention includes the materials discussed in the introductory part, which include oils, both of animal and vegetable nature, and derivatives thereof, based on C₁₂ to C₂₂ triglycerides, for example the C₁₂ to C₂₂ fatty acids and nitriles.

The invention is elucidated on the basis of the following examples, without being limited thereto.

### EXAMPLES 1 and 2

Two lots of catalyst particles were tested for their activity in the hydrogenation of soy bean oil, having a iodine value of 131.6. One lot had an average weight of 40 mg and an average height of 1.7 mm (Example 1). The second lot had an average weight of 175 mg and an average height of 3.1 mm (Example 2). Prior to the use thereof all lots of catalyst particles were stored for two weeks at 30°C in air, in order to eliminate the influence of different storage conditions.

Using a catalyst concentration of 0.01 wt.% of nickel, soy bean oil was hydrogenated at 120°C for 60 minutes at a hydrogen pressure of 0.70 bar. The results of the experiments were that the catalyst of Example 1 resulted in a decrease of the iodine value of 15.1, whereas the catalyst of example 2 gave a decrease of 21.2.

This clearly shows that the size of the actual particles has a profound influence on the activity in this experiment.

## Claims

1. Hydrogenation catalyst particles based on nickel or cobalt and a support, said particles consisting of a matrix of hardened oil or a derivative thereof, having incorporated therein hydrogenation catalyst particles having a particle size in the range of 1 to 100 µm, based on nickel or cobalt and a support, wherein the matrix material is solid at a temperature of 25°C and the matrix material particles having an average weight of at least 120 mg and an average height of at least 2.8 mm, the said particles being obtainable by preparing a suspension of the said hydrogenation catalyst particles in a melt of the said matrix material and letting droplets of the said suspension solidify.

2. Catalyst particles according to claim 1, wherein the particles have an average weight of at least 130, more in particular at least 140 mg.

3. Catalyst particles according to claim 1 or 2, wherein the average height of the particles is at least 2.9, preferably at least 3.0 mm.

4. Catalyst particles according to claim 1-3, wherein the catalyst is a supported nickel catalyst.

5. Catalyst particles according to claim 1-4, wherein the amount of nickel in the particles, calculated on the basis of the combined weight of catalyst and matrix does not exceed 35 wt.%.

6. Catalyst particles according to claim 1-5, wherein the nickel or cobalt content of the catalyst is between 5 and 95 %, based on the combined weight of the support and the nickel or cobalt.

7. Catalyst particles according to claim 1-6, wherein the particles have an essentially hemispherical shape.

8. Catalyst particles according to claim 7, wherein the surface to volume ratio is less than 1.75 mm⁻¹, preferably between 0.5 and 1.75 mm⁻¹.

9. Use of the catalyst particles according to claim 1-8 in the hydrogenation of animal or vegetable oil.

10. Use of the catalyst particles according to claim 1-8 in the hydrogenation of fatty nitrile to fatty amine.

## Patentansprüche

1. Hydrierungskatalysatorteilchen auf der Basis von Nickel oder Cobalt und einem Träger, wobei die Teilchen aus einer Matrix aus gehärtetem Öl oder einem Derivat davon bestehen, in der Hydrierungskatalysatorteilchen mit einer Teilchengröße im Bereich von 1 bis 100 µm, auf der Basis von Nickel oder Cobalt und einem Träger, eingearbeitet sind, wobei das Matrixmaterial bei einer Temperatur von 25°C fest ist, und die Matrixmaterialteilchen ein mittleres Gewicht von mindestens 120 mg und eine mittlere Höhe von mindestens 2,8 mm aufweisen, wobei die Teilchen durch Herstellen einer Suspension der Hydrierungskatalysatorteilchen in einer Schmelze des Matrixmaterials und Erstarrenlassen von Tröpfchen dieser Suspension erhalten werden können.

2. Katalysatorteilchen nach Anspruch 1, wobei die Teilchen ein mittleres Gewicht von mindestens 130, insbesondere mindestens 140 mg aufweisen.

3. Katalysatorteilchen nach Anspruch 1 oder 2, wobei die mittlere Höhe der Teilchen mindestens 2,9, vorzugsweise mindestens 3,0 mm beträgt.

4. Katalysatorteilchen nach Anspruch 1 bis 3, wobei der Katalysator ein geträgerter Nickelkatalysator ist.

5. Katalysatorteilchen nach Anspruch 1 bis 4, wobei die Menge von Nickel in den Teilchen, berechnet auf der Basis des kombinierten Gewichts des Katalysators und der Matrix, 35 Gew.-% nicht übersteigt.

6. Katalysatorteilchen nach Anspruch 1 bis 5, wobei der Nickel- oder Cobaltgehalt des Katalysators zwischen 5 und 95 %, bezogen auf das kombinierte Gewicht des Trägers und des Nickels oder Cobalts, liegt.

7. Katalysatorteilchen nach Anspruch 1 bis 6, wobei die Teilchen eine im Wesentlichen halbkugelförmige Gestalt aufweisen.

8. Katalysatorteilchen nach Anspruch 7, wobei das Oberfläche zu VolumenVerhältnis weniger als 1,75 mm⁻¹ beträgt und vorzugsweise zwischen 0,5 und 1,75 mm⁻¹ liegt.

9. Verwendung der Katalysatorteilchen nach Anspruch 1 bis 8 bei der Hydrierung von tierischem oder pflanzlichem Öl.

10. Verwendung der Katalysatorteilchen nach Anspruch 1 bis 8 bei der Hydrierung von Fettnitril zu Fettamin.

## Revendications

1. Particules de catalyseur d'hydrogénation à base de nickel ou de cobalt et d'un support, lesdites particules consistant en une matrice d'huile durcie ou de l'un de ses dérivés, ayant, incorporées en elle, des particules de catalyseur d'hydrogénation ayant une taille de particule dans l'intervalle de 1 à 100 µm, à base de nickel ou de cobalt et d'un support, le matériau de matrice étant solide à une température de 25 °C et les particules de matériau de matrice ayant une masse moyenne d'au moins 120 mg et une hauteur moyenne d'au moins 2,8 mm, lesdites particules pouvant être obtenues en préparant une suspension desdites particules de catalyseur d'hydrogénation dans un mélange en fusion dudit matériau de matrice et en laissant des gouttelettes de ladite suspension se solidifier.

2. Particules de catalyseur selon la revendication 1, lesdites particules ayant une masse moyenne d'au moins 130, plus particulièrement d'au moins 140 mg.

3. Particules de catalyseur selon la revendication 1 ou 2, dans lesquelles la hauteur moyenne des particules est d'au moins 2,9, de préférence d'au moins 3,0 mm.

4. Particules de catalyseur selon les revendications 1 à 3, dans lesquelles le catalyseur est un catalyseur de nickel supporté.

5. Particules de catalyseur selon les revendications 1 à 4, dans lesquelles la quantité de nickel dans les particules, calculée sur la base de la masse combinée de catalyseur et de matrice, ne dépasse pas 35% en poids.

6. Particules de catalyseur selon les revendications 1 à 5, dans lesquelles la teneur en nickel ou en cobalt dans le catalyseur est entre 5 et 95%, par rapport à la masse combinée du support et du nickel ou du cobalt.

7. Particules de catalyseur selon les revendications 1 à 6, dans lesquelles les particules ont une forme essentiellement hémisphérique.

8. Particules de catalyseur selon la revendication 7, dans laquelle le rapport surface à volume est inférieur à 1,75 mm⁻¹, de préférence entre 0,5 et 1,75 mm⁻¹.

9. Utilisation des particules de catalyseur selon les revendications 1 à 8 dans l'hydrogénation d'une huile animale ou végétale.

10. Utilisation de particules de catalyseur selon les revendications 1 à 8 dans l'hydrogénation de cyanure organique en amine grasae.
